# EUROPÄISCHE PATENTSCHRIFT

(11) **EP 1 240 218 B1**
(45) Veröffentlichungstag und Bekanntmachung des Hinweises auf die Patenterteilung: **15.02.2006**
(21) Anmeldenummer: 00981275.1
(22) Anmeldetag: 18.11.2000
(51) Int. Cl.: C08F 220/12, C10M 145/14

(54) **GRADIENTENCOPOLYMERE SOWIE VERFAHREN ZUR HERSTELLUNG UND VERWENDUNG**
GRADIENT COPOLYMERS AND METHOD FOR THE PRODUCTION THEREOF AND THEIR USE
COPOLYMERES A GRADIENT D'INDICE ET PROCEDE PERMETTANT DE LES PREPARATION ET LEUR UTILISATION

(30) Priorität: 30.11.1999 US 450720
(43) Veröffentlichungstag der Anmeldung: 18.09.2002
(73) Patentinhaber: RohMax Additives GmbH, 64293 Darmstadt (DE)
(72) Erfinder: SCHERER, Markus, 66822 Lebach (DE); SOUCHIK, Joan, Blue Bell, PA 19422 (US); BOLLINGER, Joseph, Martin, N. Wales, PA 19454 (US)
(86) Internationale Anmeldenummer: PCT/EP2000/011505
(87) Internationale Veröffentlichungsnummer: WO 2001/040333

(56) Entgegenhaltungen:
- EP-A- 0 153 209
- EP-A- 0 861 859
- WO-A-97/34940
- GB-A- 906 412

## Beschreibung

Die vorliegende Erfindung betrifft Gradientencopolymere, Konzentrate und Schmieröle, die diese Copolymere aufweisen, Verfahren zur Herstellung dieser Copolymere sowie deren Verwendung als Stockpunkterniedriger.

Schmieröle, insbesondere Mineralöle, die beispielsweise durch Destillation aus Erdölen gewonnen werden, enthalten in der Regel langkettige n-Alkane, die einerseits ein gutes Viskositäts-/Temperaturverhalten bewirken, andererseits aber beim Abkühlen in kristalliner Form ausfallen und dadurch das Fließen der Öle beeinträchtigen oder völlig verhindern ("stocken"). Eine Verbesserung der Tieftemperaturfließeigenschaften kann beispielsweise durch Entparaffinierung erreicht werden. Allerdings steigen die Kosten erheblich an, wenn eine vollständige Entparaffinierung erzielt werden soll. Daher wird ein Pourpoint bis zu einem Bereich von ca. -15°C durch partielle Entparaffinierung erzielt, der durch Zugabe von sogenannten Pourpoint-Erniedrigern oder Stockpunktverbesserern, weiter herabgesetzt werden kann. Diese Mittel können bereits in Konzentrationen von 0,01 bis 1 Gew.-% den Stockpunkt wirksam herabsetzen.

Die Wirkungsweise dieser Verbindungen ist noch nicht vollständig aufgeklärt. Allerdings wird angenommen, daß paraffinähnliche Verbindungen in die wachsenden Paraffinkristallflächen eingebaut werden und so verhindern, daß eine weitere Kristallisation und insbesondere die Bildung von ausgedehnten Kristallverbänden eintritt.

Eine stockpunktverbessernde Wirkung bestimmter Strukturelemente ist bekannt. So zeigen insbesondere Polymere mit ausreichend langen Alkylseitenketten eine pourpointverbessernde Wirkung. Hierbei wird angenommen, daß diese Alkylgruppen in die wachsenden Paraffinkristalle eingebaut werden und das Kristallwachstum stören (Vergleiche Ullmanns Enzyklopädie der technischen Chemie, 4. Auflage, Band 20, Verlag Chemie, 1981, S. 548). Von technisch anwendbaren Pourpointerniedrigern muß darüber hinaus verlangt werden, daß sie gute thermische, oxidative und chemische Stabilität, Scherfestigkeit usw. besitzen. Darüber hinaus sollten die Stockpunktverbesserer kostengünstig herstellbar sein, da sie in großen Mengen eingesetzt werden.

Poly(meth)acrylate mit langkettigen Alkylresten werden weithin als Stockpunkterniedrgier eingesetzt. Diese Verbindungen sind beispielsweise in US-PS 2 091 627, US-PS 2 100 993, US-PS 2 114 233 und EP-A-0 236 844 beschrieben. Im allgemeinen werden diese Pourpoint-Erniedriger durch radikalische Polymerisation erhalten. Dementsprechend können sie kostengünstig hergestellt werden.

Als nächstliegender Stand der Technik wird EP-A-0 861 859 zitiert. Es wurde festgestellt, daß verschiedene Stockpunktverbesserer eine unterschiedliche Leistungsfähigkeit in verschiedenen Schmierölen aufweisen. Variiert man jedoch die Zusammensetzung über die Reaktionsdauer der Polymerisation, so erhält man Additive, die in sehr vielen Mineralölen eine hohe Wirksamkeit aufweisen. Durch dieses Verfahren werden Mischungen von statistischen Copolymeren hergestellt, da die Zusammensetzung der Monomermischung während er Lebensdauer der Radikale (ca. 1 Sekunde) konstant bleibt.

Die Tieftemperatureigenschaften, die sich beispielsweise aus den Stockpunkten gemäß ASTM D-97, den Minirotationsviskosimetrie-Versuchswerten gemäß ASTM D-4684 oder den Scanning-Brookfieldresultaten gemäß ASTM D-5133 ergeben, sind für vielen Anwendungen brauchbar, trotzdem genügen die Tieftemperatureigenschaften vielen Anforderungen noch nicht.

Hierbei sollte berücksichtigt werden, daß wirksamere Additive in einer geringeren Menge zugegeben werden könnten, um eine gewünschte Fließeigenschaft bei tiefen Temperaturen zu erzielen. Bei den eingesetzten Mengen an Schmierölen und Biodieselkraftstoffen ergäben sich auch bei relativ geringen Unterschieden erhebliche Einsparpotentiale.

In Anbetracht des Standes der Technik ist es nun Aufgabe der vorliegenden Erfindung Additive zur Verfügung zu stellen, durch die im Vergleich zu herkömmlichen Zusätzen verbesserte Fließeigenschaften von Schmierölen und Biodieselkraftstoffen bei tiefen Temperaturen erzielt werden können. Des weiteren war Aufgabe der vorliegenden Erfindung Additive zur Verfügung zu stellen, die eine hohe Stabilität gegen Oxidation und thermische Belastung sowie eine hohe Scherfestigkeit besitzen. Zugleich sollten die neuen Additive einfach und kostengünstig herstellbar sein.

Gelöst werden diese sowie weitere nicht explizit genannte Aufgaben, die jedoch aus den hierin einleitend diskutierten Zusammenhängen ohne weiteres ableitbar oder erschließbar sind, durch Gradientencopolymere mit allen Merkmalen des Patentanspruchs 1. Zweckmäßige Abwandlungen der erfindungsgemäßen Copolymere werden in den auf Anspruch 1 rückbezogenen Ansprüchen unter Schutz gestellt. Hinsichtlich des Konzentrats als Schmieröladditiv liefert Anspruch 6 die Lösung der zugrunde liegenden Aufgabe, während Ansprüche 8 und 11 Schmieröle bzw. Dieselkraftstoffe schützen, die erfindungsgemäße Copolymere aufweisen. Bezüglich des Verfahrens zur Herstellung von Gradientencopolymeren und deren Verwendung stellen die Ansprüche 13 und 14 eine Lösung des Problems dar.

Dadurch, daß man eine Mischung von olefinisch ungesättigten Monomeren polymerisiert, die aus
a) 0 bis 40 Gew.-% einer oder mehreren ethylenisch ungesättigten Esterverbindungen der Formel (I) 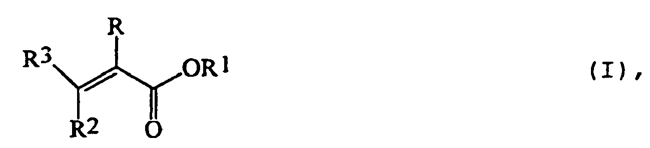 worin R Wasserstoff oder Methyl darstellt, R¹ einen linearen oder verzweigten Alkylrest mit 1 bis 5 Kohlenstoffatomen bedeutet, R² und R³ unabhängig Wasserstoff oder eine Gruppe der Formel -COOR' darstellen, worin R' Wasserstoff oder eine Alkylgruppe mit 1 bis 5 Kohlenstoffatomen bedeutet,
b) 10 bis 98 Gew.-% einer oder mehreren ethylenisch ungesättigten Esterverbindungen der Formel (II) 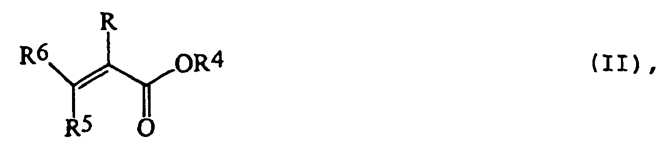 worin R Wasserstoff oder Methyl darstellt, R⁴ einen linearen oder verzweigten Alkylrest mit 6 bis 15 Kohlenstoffatomen bedeutet, R⁵ und R⁶ unabhängig Wasserstoff oder eine Gruppe der Formel -COOR'' darstellen, worin R" Wasserstoff oder eine Alkylgruppe mit 6 bis 15 Kohlenstoffatomen bedeutet,
c) 0 bis 80 Gew.-% einer oder mehreren ethylenisch ungesättigten Esterverbindungen der Formel (III) 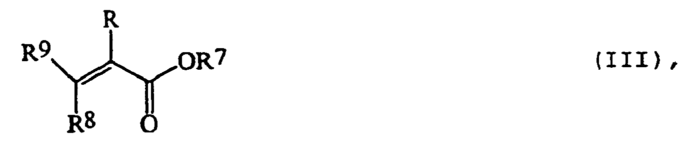 worin R Wasserstoff oder Methyl darstellt, R⁷ einen linearen oder verzweigten Alkylrest mit 16 bis 30 Kohlenstoffatomen bedeutet, R⁸ und R⁹ unabhängig Wasserstoff oder eine Gruppe der Formel -COOR''' darstellen, worin R''' Wasserstoff oder eine Alkylgruppe mit 16 bis 30 Kohlenstoffatomen bedeutet,
d) 0 bis 50 Gew.-% Comonomer

besteht, jeweils bezogen auf das Gesamtgewicht der ethylenisch ungesättigten Monomere, wobei man die Mischung der ethylenisch ungesättigten Monomere während des Kettenwachstums verändert, sind Gradientencopolymere erhältlich, die eine hohe Wirksamkeit als Stockpunktverbesserer oder Fließverbesserer aufweisen. Die Stockpunktverbessernde Wirkung kann beispielsweise gemäß ASTM D 97 bestimmt werden.

Darüber hinaus zeigen Schmieröle, die die erfindungsgemäßen Gradientencopolymere umfassen, hervorragende Minirotationsviskosimetriewerte (MRV), die gemäß ASTM D 4684 erhalten werden können, und Scanning-Brookfieldresultate, wie diese sich nach ASTM D 5133 ergeben.

Biodieselkraftstoffe, die einen Gehalt an Gradientencopolymere der vorliegenden Erfindung aufweisen, zeigen bei Cold-Filter-Plugging-Point-Messungen nach IP 309 oder Low-Temperature-Flow-Test-Versuchen gemäß ASTM D 4539 außergewöhnliche Resultate. Falls ein bestimmte Fließeigenschaften bei einer vorgegebenen Temperatur erzielt werden sollen, so kann die Menge an Additiv durch die vorliegende Erfindung vermindert werden.

Zugleich lassen sich durch die erfindungsgemäßen Gradientencopolymere eine Reihe weiterer Vorteile erzielen. Hierzu gehören u.a.:
⇒ Die Copolymere der vorliegenden Erfindung zeigen eine enge Molekulargewichtsverteilung. Hierdurch zeigen sie eine hohe Stabilität gegen Schereinwirkungen.
⇒ Die erfindungsgemäßen Gradientencopolymere können kostengünstig hergestellt werden.
⇒ Die Gradientencopolymere zeigen eine hohe Oxidationsstabilität und sind chemisch sehr beständig.
⇒ Die Gradientencopolymere zeigen in vielen unterschiedlichen Mineralölen oder Biodieselkraftstoffen eine hervorragende Wirksamkeit.

Gradientencopolymere bezeichnen Copolymere, die einen Gradienten aufweisen. Copolymere sind an sich bekannt und bezeichnen Polymere, die durch Polymerisation von zwei oder mehr verschiedenartigen Monomeren erhalten werden.

Der Begriff Gradient bezieht sich auf die Verteilung der Monomerbausteine, auch wiederkehrende Einheiten genannt, entlang der Hauptkette des Copolymeren. Hierbei ist die Konzentration von mindestens einem Monomerbaustein an einem Kettenende höher als an dem anderen Ende der Polymerkette. Teilt man die Hauptkette in 10 gleich lange Abschnitte auf, so nimmt die Konzentration mindestens einer wiederkehrenden Einheit in mindestens drei aufeinanderfolgenden Abschnitte zu bzw. ab. Die wiederkehrenden Einheiten ergeben sich durch die Polymerisation aus den jeweils eingesetzten Monomeren.

Ein interessanter Aspekt der vorliegenden Erfindung sind Gradientencopolymere, die sich durch einen linearen Gradient auszeichnen.

Bei bevorzugten Gradientencopolymeren mit einem linearen Gradient nimmt die Konzentration mindestens einer wiederkehrenden Einheit über mindestens acht der zehn Abschnitte zu. Andererseits ist die Zunahme über alle Abschnitte in etwa konstant.

Ein weiterer interessanter Gesichtspunkt sind Gradientencopolymere, die einen nichtlinearen Gradienten aufweisen. Auch diese bevorzugten Polymere zeichnen sich dadurch aus, daß die Konzentration mindestens eines Monomers über mindestens acht der zehn Abschnitte zunimmt. Allerdings ist die Zunahme der Konzentration an wiederkehrenden Einheiten nicht konstant, sondern die Zunahme steigt über mindestens drei der neun Abschnitte an.

Bevorzugte Gradientencopolymere weisen einen Gradient von mindestens 5%, besonders bevorzugt mindestens 10% und ganz besonders bevorzugt mindestens 20% auf, der sich auf den Konzentrationsunterschied des ersten und des letzten Abschnitts bezieht.

Der Terminus "Konzentration an Monomerbausteinen" bezieht sich auf die Zahl an diesen Einheiten, die von den eingesetzten Monomeren abgeleitet sind, bezogen auf die Gesamtzahl an wiederkehrenden Einheiten innerhalb eines Abschnitts. Die Länge eines Abschnitts und damit die Gesamtzahl ergibt sich aus dem Zahlenmittel des Molekulargewichts Mₙ, welches durch 10 dividiert wird, um die Gesamtzahl an wiederkehrenden Einheiten eines Abschnitts zu erhalten.

Entsprechend bedeutet der Begriff Konzentrationsunterschied die Differenz zwischen den Konzentrationen mindestens eines Monomerbausteins zweier Abschnitte.

Dem Fachmann ist die Polydispersität von Polymeren bewußt. Dementsprechend beziehen sich auch die Angaben bezüglich der Zunahme an Konzentration mindestens einer wiederkehrenden Einheit auf ein statisches Mittel über alle Polymerketten der entsprechenden Abschnitte.

Die Zusammensetzungen, aus denen die erfindungsgemäßen Gradientencopolymere erhalten werden, enthalten insbesondere (Meth)acrylate, Maleate und/oder Fumarate, die unterschiedliche Alkoholreste aufweisen. Der Ausdruck (Meth)acrylate umfaßt Methacrylate und Acrylate sowie Mischungen aus beiden. Diese Monomere sind weithin bekannt. Hierbei kann der Alkylrest linear, cyclisch oder verzweigt sein.

Mischungen, aus denen die erfindungsgemäßen Gradientencopolymere erhältlich sind, können 0 bis 40 Gew.-%, insbesondere 0,5 bis 20 Gew.-%, einer oder mehreren ethylenisch ungesättigten Esterverbindungen der Formel (I) enthalten 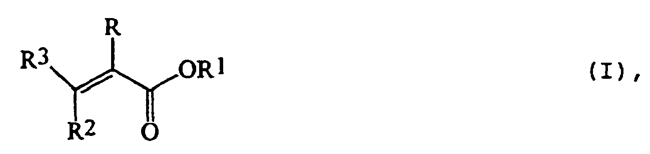 worin R Wasserstoff oder Methyl darstellt, R¹ einen linearen oder verzweigten Alkylrest mit 1 bis 5 Kohlenstoffatomen bedeutet, R² und R³ unabhängig Wasserstoff oder eine Gruppe der Formel -COOR' darstellen, worin R' Wasserstoff oder eine Alkylgruppe mit 1 bis 5 Kohlenstoffatomen bedeutet.

Beispiele für Komponente a) sind unter anderem (Meth)acrylate, Fumarate und Maleate, die sich von gesättigten Alkoholen ableiten, wie Methyl (meth)acrylat, Ethyl (meth) acrylat, n-Propyl(meth)acrylat, iso-Propyl(meth)acrylat, n-Butyl(meth)acrylat, tert-Butyl(meth)acrylat und Pentyl(meth)acrylat; Cycloalkyl(meth)acrylate, wie Cyclopentyl(meth)acrylat.

Als wesentlichen Bestandteil enthalten die zu polymerisierenden Zusammensetzungen 10 bis 98 Gew.-%, insbesondere 20 bis 95 Gew.-%, einer oder mehreren ethylenisch ungesättigten Esterverbindungen der Formel (II) 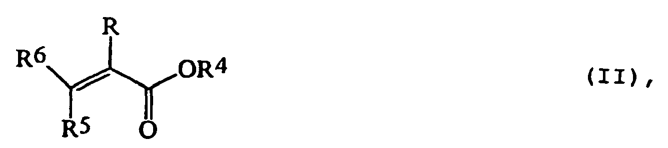 worin R Wasserstoff oder Methyl darstellt, R⁴ einen linearen oder verzweigten Alkylrest mit 6 bis 15 Kohlenstoffatomen bedeutet, R⁵ und R⁶ unabhängig Wasserstoff oder eine Gruppe der Formel -COOR'' darstellen, worin R" Wasserstoff oder eine Alkylgruppe mit 6 bis 15 Kohlenstoffatomen bedeutet.

Zu diesen gehören unter anderem (Meth)acrylate, Fumarate und Maleate, die sich von gesättigten Alkoholen ableiten, wie Hexyl(meth)acrylat, 2-Ethylhexyl(meth)acrylat, Heptyl(meth)acrylat, 2-tert.-Butylheptyl(meth)acrylat, Octyl(meth)acrylat, 3-iso-Propylheptyl(meth)acrylat, Nonyl(meth)acrylat, Dzcyl (meth) acrylat, Undecyl (meth) acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat; Cycloalkyl(meth)acrylate, wie Cyclohexyl(meth)acrylat, Bornyl(meth)acrylat; sowie die entsprechenden Fumarate und Maleate.

Darüber hinaus können die erfindungsgemäß zu verwendenden Monomermischungen 0 bis 80 Gew.-%, vorzugsweise 0,5 bis 60 Gew.-% einer oder mehreren ethylenisch ungesättigten Esterverbindungen der Formel (III) aufweisen 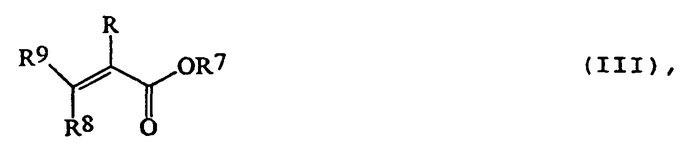 worin R Wasserstoff oder Methyl darstellt, R⁷ einen linearen oder verzweigten Alkylrest mit 16 bis 30 Kohlenstoffatomen bedeutet, R⁸ und R⁹ unabhängig Wasserstoff oder eine Gruppe der Formel -COOR''' darstellen, worin R''' Wasserstoff oder eine Alkylgruppe mit 16 bis 30 Kohlenstoffatomen bedeutet.

Beispiele für Komponente c) sind unter anderem (Meth)acrylate, die sich von gesättigten Alkoholen ableiten, wie Hexadecyl(meth)acrylat, 2-Methylhexadecyl(meth)acrylat, Heptadecyl(meth)acrylat, 5-iso-propylheptadecyl(meth)acrylat, 4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl(meth)acrylat, Cetyleicosyl(meth)acrylat, Docosyl(meth)acrylat und/oder Eicosyltetratriacontyl(meth)acrylat; Cycloalkyl(meth)acrylate, wie 2,3,4,5-Tetra-t-butylcyclohexyl(meth)acrylat; sowie die entsprechenden Fumarate und Maleate.

Die Esterverbindungen mit langkettigem Alkoholrest, insbesondere die Komponenten (b) und (c), lassen sich beispielsweise durch Umsetzen von (Meth)acrylaten, Fumaraten, Maleaten und/oder den entsprechenden Säuren mit langkettigen Fettalkoholen erhalten, wobei im allgemeinen eine Mischung von Estern, wie beispielsweise (Meth)acrylaten mit verschieden langkettigen Alkoholresten entsteht. Zu diesen Fettalkoholen gehören unter anderem Oxo Alcohol® 7911 und Oxo Alcohol® 7900, Oxo Alcohol® 1100 von Monsanto; Alphanol® 79 von ICI; Nafol® 1620, Alfol® 610 und Alfol® 810 von Condea; Epal® 610 und Epal® 810 von Ethyl Corporation; Linevol® 79, Linevol® 911 und Dobanol® 25L von Shell AG; Lial 125 von Augusta® Mailand; Dehydad® und Lorol® von Henkel KGaA sowie Linopol® 7 - 11 und Acropol® 91 Ugine Kuhlmann.

Von den ethylenisch ungesättigten Esterverbindungen sind die (Meth)acrylate gegenüber den Maleaten und Fumaraten besonders bevorzugt, d.h. R², R³, R⁵, R⁶, R⁸ und R⁹ der Formeln (I), (II) und (III) stellen in besonders bevorzugten Ausführungsformen Wasserstoff dar.

Die Komponente d) umfaßt insbesondere ethylenisch ungesättigte Monomere, die sich mit den ethylenisch ungesättigten Esterverbindungen der Formeln (I), (II) und/oder (III) copolymerisieren lassen.

Jedoch sind Comonomere zur Polymerisation gemäß der vorliegenden Erfindung besonders geeignet, die der Formel entsprechen: 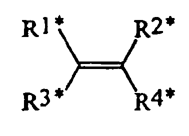
worin R^{1*} und R^{2*} unabhängig ausgewählt sind aus der Gruppe bestehend aus Wasserstoff, Halogene, CN, lineare oder verzweigte Alkylgruppen mit 1 bis 20, vorzugsweise 1 bis 6 und besonders bevorzugt 1 bis 4 Kohlenstoffatomen, welche mit 1 bis (2n+1) Halogenatomen substituiert sein können, wobei n die Zahl der Kohlenstoffatome der Alkylgruppe ist (beispielsweise CF₃), α, β- ungesättigte lineare oder verzweigte Alkenyl- oder Alkynylgruppen mit 2 bis 10, vorzugsweise von 2 bis 6 und besonders bevorzugt von 2 bis 4 Kohlenstoffatomen, welche mit 1 bis (2n-1) Halogenatomen, vorzugsweise Chlor, substituiert sein können, wobei n die Zahl der Kohlenstoffatome der Alkylgruppe, beispielsweise CH₂=CCl-, ist, Cycloalkylgruppen mit 3 bis 8 Kohlenstoffatomen, welche mit 1 bis (2n-1) Halogenatomen, vorzugsweise Chlor, substituiert sein können, wobei n die Zahl der Kohlenstoffatome der Cycloalkylgruppe ist; C(=Y*)R^{5*}, C(=Y*)NR^{6*}R^{7*}, Y*C(=Y*)R^{5*}, SOR^{5*}, SO₂R^{5*}, OSO₂R⁵⁺, NR^{8*}SO₂R^{5*}, PR^{5*}₂, P(=Y*)R^{5*}₂, Y*PR^{5*}₂, Y*P(=Y*)R^{5*}₂, NR^{8*}₂ welche mit einer zusätzlichen R^{8*}-, Aryl- oder Heterocyclyl-Gruppe quaternärisiert sein kann, wobei Y* NR^{8*}, S oder O, vorzugsweise O sein kann; R^{5*} eine Alkylgruppe mit 1 bis 20 Kohlenstoffatomen, eine Alkylthio mit 1 bis 20 Kohlenstoffatomen, OR¹⁵ (R¹⁵ ist Wasserstoff oder ein Alkalimetall), Alkoxy von 1 bis 20 Kohlenstoffatomen, Aryloxy oder Heterocyklyloxy ist; R^{6*} und R^{7*} unabhängig Wasserstoff oder eine Alkylgruppe mit 1 bis 20 Kohlenstoffatomen sind, oder R^{6*} und R^{7*} können zusammen eine Alkylengruppe mit 2 bis 7 vorzugsweise 2 bis 5 Kohlenstoffatomen bilden, wobei sie einen 3 bis 8-gliedrigen, vorzugsweise 3 bis 6-gliedrigen Ring bilden, und R^{8*} Wasserstoff, lineare oder verzweigte Alkyl- oder Arylgruppen mit 1 bis 20 Kohlenstoffatomen sind;
R^{3*} und R^{4*} unabhängig ausgewählt aus der Gruppe bestehend aus Wasserstoff, Halogen (vorzugsweise Fluor oder Chlor), Alkylgruppen mit 1 bis 6 Kohlenstoffatomen und COOR^{9*}, worin R^{9*} Wasserstoff, ein Alkalimetall oder eine Alkylgruppe mit 1 bis 40 Kohlenstoffatomen ist, sind, oder R^{1*} und R^{3*} können zusammen eine Gruppe der Formel (CH₂)_{n'} bilden, welche mit 1 bis 2n' Halogenatomen oder C₁ bis C₄ Alkylgruppen substituiert sein kann, oder der Formel C(=O)-Y*-C(=O) bilden, wobei n' von 2 bis 6, vorzugsweise 3 oder 4 ist und Y* wie zuvor definiert ist; und wobei zumindest 2 der Reste R^{1*}, R^{2*}, R^{3*} und R^{4*} Wasserstoff oder Halogen sind.

Hierzu gehören unter anderem Hydroxylalkyl(meth)acrylate, wie 3-Hydroxypropylmethacrylat, 3,4-Dihydroxybutylmethacrylat, 2-Hydroxyethylmethacrylat, 2-Hydroxypropylmethacrylat, 2,5-Dimethyl-1,6-hexandiol(meth)acrylat, 1,10-Decandiol(meth)acrylat:
Aminoalkyl(meth)acrylate, wie N-(3-Dimethylaminopropyl)methacrylamid, 3-Diethylaminopentylmethacrylat, 3-Dibutylaminohexadecyl(meth)acrylat;
Nitrile der (Meth)acrylsäure und andere stickstoffhaltige Methacrylate, wie N-(Methacryloyloxyethyl)diisobutylketimin, N-(Methacryloyloxyethyl)dihexadecylketimin, Methacryloylamidoacetonitril, 2-Methacryloyloxyethylmethylcyanamid, Cyanomethylmethacrylat;
Aryl(meth)acrylate, wie Benzylmethacrylat oder Phenylmethacrylat, wobei die Arylreste jeweils unsubstituiert oder bis zu vierfach substituiert sein können;
carbonylhaltige Methacrylate, wie 2-Carboxyethylmethacrylat, Carboxymethylmethacrylat, oxazolidinylethylmethacrylat, N-(Methacryloyloxy)formamid, Acetonylmethacrylat, N-Methacryloylmorpholin, N-Methacryloyl-2-pyrrolidinon, N-(2-Methacryloyloxyethyl)-2-pyrrolidinon, N-(3-Methacryloyloxypropyl)-2-pyrrolidinon, N-(2-Methacryloyloxypentadecyl)-2-pyrrolidinon, N-(3-Methacryloyloxyheptadecyl)-2-pyrrolidinon;
Glycoldimethacrylate, wie 1,4-Butandiolmethacrylat, 2-Butoxyethylmethacrylat, 2-Ethoxyethoxymethylmethacrylat, 2-Ethoxyethylmethacrylat;
Methacrylate von Etheralkoholen, wie Tetrahydrofurfurylmethacrylat, Vinyloxyethoxyethylmethacrylat, Methoxyethoxyethylmethacrylat, 1-Butoxypropylmethacrylat, 1-Methyl-(2-vinyloxy)ethylmethacrylat, Cyclohexyloxymethylmethacrylat, Methoxymethoxyethylmethacrylat, Benzyloxymethylmethacrylat, Furfurylmethacrylat, 2-Butoxyethylmethacrylat, 2-Ethoxyethoxymethylmethacrylat, 2-Ethoxyethylmethacrylat, Allyloxymethylmethacrylat, 1-Ethoxybutylmethacrylat, Methoxymethylmethacrylat, 1-Ethoxyethylmethacrylat, Ethoxymethylmethacrylat; Methacrylate von halogenierten Alkoholen, wie 2,3-Dibromopropylmethacrylat, 4-Bromophenylmethacrylat, 1,3-Dichloro-2-propylmethacrylat, 2-Bromoethylmethacrylat, 2-Iodoethylmethacrylat, Chloromethylmethacrylat; Oxiranylmethacrylate, wie 2,3-Epoxybutylmethacrylat, 3,4-Epoxybutylmethacrylat, 10,11-Epoxyundecylmethacrylat, 2,3-Epoxycyclohexylmethacrylat; Glycidylmethacrylat;
Phosphor-, Bor- und/oder Silicium-haltige Methacrylate, wie 2-(Dimethylphosphato)propylmethacrylat, 2-(Ethylenphosphito)propylmethacrylat, Dimethylphosphinomethylmethacrylat, Dimethylphosphonoethylmethacrylat, Diethylmethacryloylphosphonat, Dipropylmethacryloylphosphat, 2-(Dibutylphosphono)ethylmethacrylat, 2,3-Butylenmethacryloylethylborat, Methyldiethoxymethacryloylethoxysilan, Diethylphosphatoethylmethacrylat; schwefelhaltige Methacrylate, wie Ethylsulfinylethylmethacrylat, 4-Thiocyanatobutylmethacrylat, Ethylsulfonylethylmethacrylat, Thiocyanatomethylmethacrylat, Methylsulfinylmethylmethacrylat, Bis(methacryloyloxyethyl)sulfid; Trimethacrylate, wie Trimethyloylpropantrimethacrylat; Vinylhalogenide, wie beispielsweise Vinylchlorid, Vinylfluorid, Vinylidenchlorid und Vinylidenfluorid; heterocyclische (Meth)acrylate, wie 2-(1-Imidazolyl)ethyl(meth)acrylat, 2-(4-Morpholinyl)ethyl(meth)acrylat und 1-(2-Methacryloyloxyethyl)-2-pyrrolidon; Vinylester, wie Vinylacetat;
Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltuluol und p-Methylstyrol, halogenierte Styrole, wie beispielsweise Monochlorstyrole, Dichlorstyrole, Tribromstyrole und Tetrabromstyrole;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether;
Maleinsäure und Maleinsäurederivate, wie beispielsweise Mono- und Diester der Maleinsäure, Maleinsäureanhydrid, Methylmaleinsäureanhydrid, Maleinimid, Methylmaleinimid;
Fumarsäure und Fumarsäurederivate, wie beispielsweise Mono- und Diester der Fumarsäure;
Diene wie beispielsweise Divinylbenzol.

Ganz besonders bevorzugte Mischungen weisen Methylmethacrylat, Butylmethacrylat, Laurylmethacrylat, Stearylmethacrylat und/oder Styrol auf.

Diese Komponenten können einzeln oder als Mischungen eingesetzt werden. Voraussetzung ist allerdings, daß mindestens zwei verschiedene Monomere polymerisiert werden.

Gradientencopolymere sind durch ATRP-Verfahren leicht darstellbar, da diese einen lebenden Charakter hat. Somit können Gradientencopolymere durch kontinuierliche Variation der während des Kettenwachstums der einzelnen Polymere vorhandenen Monomermischung erhalten werden.

Dies kann beispielsweise dadurch erzielt werden, daß man Monomere vorlegt und in diese Mischung eine andere Monomermischung kontinuierlich zugibt. Vorzugsweise werden hierbei die über die einzelnen Ketten variierenden Monomere über verschiedene Zuleitungen der Reaktionsmischung zugegeben. Kontinuierlich bedeutet, daß die Dauer der Zugabe groß in Relation zur Reaktionszeit, also dem Kettenwachstum, ist. Dies kann in weiten Bereichen schwanken. Ohne daß hierdurch eine Beschränkung erfolgen soll, ist das Verhältnis aus Zugabezeit zur gesamten Reaktionszeit größer als 1:10, vorzugsweise größer als 1:5, besonders bevorzugt größer als 1:3 und ganz besonders bevorzugt größer als 1:2.

Die zuvor genannten Monomere werden mittels Initiatoren, die eine übertragbare Atomgruppe aufweisen, polymerisiert. Im allgemeinen lassen sich diese Initiatoren durch die Formel Y-(X)ₘ beschreiben, worin Y das Kernmolekül darstellt, von dem angenommen wird, daß es Radikale bildet, X ein übertragbares Atom oder eine übertragbare Atomgruppe repräsentiert und m eine ganze Zahl im Bereich von 1 bis 10 dargtellt, abhängig von der Funktionalität der Gruppe Y. Falls m > 1 ist, können die verschiedenen übertragbaren Atomgruppen X eine unterschiedliche Bedeutung haben. Ist die Funktionalität des Initiators > 2, so werden sternförmige Polymere erhalten. Bevorzugte übertragbare Atome bzw. Atomgruppen sind Halogene, wie beispielsweise Cl, Br und/oder J.

Wie zuvor erwähnt, wird von der Gruppe Y angenommen, daß sie Radikale bildet, die als Startmolekül dienen, wobei sich dieses Radikal an die ethylenisch ungesättigten Monomere anlagert. Daher weist die Gruppe Y vorzugsweise Substituenten auf, die Radikale stabilisieren können. Zu diesen Substituenten gehören unter anderem -CN, -COR und -CO₂R, wobei R jeweils ein Alkyl- oder Arylrest darstellt, Aryl- und/oder Heteroaryl-Gruppen.

Alkylreste sind gesättigte oder ungesättigte, verzweigte oder lineare Kohlenwasserstoffreste mit 1 bis 40 Kohlenstoffatomen, wie beispielsweise Methyl, Ethyl, Propyl, Butyl, Pentyl, 2-Methylbutyl, Pentenyl, Cyclohexyl, Heptyl, 2-Methylheptenyl, 3-Methylheptyl, Octyl, Nonyl, 3-Ethylnonyl, Decyl, Undecyl, 4-Propenylundecyl, Dodecyl, Tridecyl, Tetradecyl, Pentadecyl, Hexadecyl, Heptadecyl, Octadecyl, Nonadecyl, Eicosyl, Cetyleicosyl, Docosyl und/oder Eicosyltetratriacontyl.

Arylreste sind cyclische, aromatische Reste, die 6 bis 14 Kohlenstoffatome im aromatischen Ring aufweisen. Diese Reste können substituiert sein. Substituenten sind beispielsweise lineare und verzweigte Alkylgruppen mit 1 bis 6 Kohlenstoffatome, wie beispielsweise Methyl, Ethyl, Propyl, Butyl, Pentyl, 2-Methylbutyl oder Hexyl; Cycloalkylgruppen, wie beispielsweise Cyclopentyl und Cyclohexyl; aromatische Gruppen, wie Phenyl oder Naphthyl; Aminogruppen, Ethergruppen, Estergruppen sowie Halogenide.

Zu den aromatischen Resten gehören beispielsweise Phenyl, Xylyl, Toluyl, Naphthyl oder Biphenyl.

Der Ausdruck "Heteroaryl" kennzeichnet ein heteroaromatisches Ringsystem, worin mindestens eine CH-Gruppe durch N oder zwei benachbarte CH-Gruppen durch S, O oder NH ersetzt sind, wie ein Rest von Thiophen, Furan, Pyrrol, Thiazol, Oxazol, Pyridin, Pyrimidin und Benzo[a]furan, die ebenfalls die zuvor genannten Substituenten aufweisen können.

Ein erfindungsgemäß verwendbarer Initiator kann jede Verbindung sein, die ein oder mehrere Atome oder Atomgruppen aufweist, welche unter den Polymerisationsbedingungen radikalisch übertragbar ist.

Geeignete Initiatoren umfassen jene der Formeln:

R¹¹R¹²R¹³C-X

R¹¹C(=O)-X

R¹¹R¹²R¹³Si-X

R¹¹R¹²N-X

R¹¹N-X₂

(R¹¹)ₙP(O)ₘ-X₃₋ₙ

(R¹¹O)ₙP(O) ₘ-X₃₋ₙ

und

(R¹¹) (R¹²O)P(O)ₘ-X,

worin X ausgewählt ist aus der Gruppe bestehend aus Cl, Br, I, OR¹⁰, [wobei R¹⁰ eine Alkylgruppe von 1 bis 20 Kohlenstoffatomen, wobei jedes Wasserstoffatom unabhängig durch ein Halogenid, vorzugsweise Flurid oder Chlorid ersetzt sein kann, Alkenyl von 2 bis 20 Kohlenstoffatomen, vorzugsweise Vinyl, Alkynyl von 2 bis 10 Kohlenstoffatomen vorzugsweise Acetylenyl, Phenyl, welches mit 1 bis 5 Halogenatomen oder Alkylgruppen mit 1 bis 4 Kohlenstoffatomen substituiert sein kann, oder Aralkyl (arylsubstituiertes Alkyl in welchem die Arylgruppe Phenyl oder substituiertes Phenyl und die Alkylgruppe ein Alkyl mit 1 bis 6 Kohlenstoffatomen darstellt, wie beispielsweise Benzyl) bedeutet;] SR¹⁴, SeR¹⁴, OC(=O)R¹⁴, OP(=O)R¹⁴, OP(=O)(OR¹⁴)₂, OP(=O)OR¹⁴, O-N(R¹⁴)₂, S-C(=S)N(R¹⁴)₂, CN, NC, SCN, CNS, OCN, CNO und N₃ darstellt, wobei R¹⁴ eine Arylgruppe oder eine lineare oder verzweigte Alkylgruppe mit 1 bis 20, vorzugsweise 1 bis 10 Kohlenstoffatomen bedeutet, wobei zwei R¹⁴-Gruppen, falls vorhanden, zusammen einen 5, 6 oder 7-gliedrigen heterocyclischen Ring bilden können; und R¹¹, R¹² und R¹³ unabhängig ausgewählt sind aus der Gruppe bestehend aus Wasserstoff, Halogene, Alkylgruppen mit 1 bis 20, vorzugsweise 1 bis 10 und besonders bevorzugt 1 bis 6 Kohlenstoffatomen, Cycloalkylgruppen mit 3 bis 8 Kohlenstoffatomen, R^{8*}₃Si, C(=Y*)R^{5*}, C(=Y*)NR^{6*}R^{7*}, wobei Y*, R^{5*}, R^{6*} und R^{7*} wie zuvor definiert sind, COCl, OH, (vorzugsweise ist einer der Reste R¹¹, R¹² und R¹³ OH), CN, Alkenyl- oder Alkynylgruppen mit 2 bis 20 Kohlenstoffatomen, vorzugsweise 2 bis 6 Kohlenstoffatomen und besonders bevorzugt Allyl oder Vinyl, Oxiranyl, Glycidyl, Alkylen- oder Alkenylengruppen mit 2 bis 6 Kohlenstoffatomen, welche mit Oxiranyl oder Glycidyl, Aryl, Heterocyclyl, Aralkyl, Aralkenyl (arylsubsituiertes Alkenyl, wobei Aryl wie zuvor definiert ist und Alkenyl Vinyl ist, welches mit ein oder zwei C₁ bis C₆ Alkylgruppen und/oder Halogenatomen, vorzugsweise mit Chlor substituiert ist) substituiert sind, Alkylgruppen mit 1 bis 6 Kohlenstoffatomen, in welchen ein bis alle der Wasserstoffatome, vorzugsweise eines, durch Halogen substituiert sind, (vorzugsweise Fluor oder Chlor, wenn ein oder mehr Wasserstoffatome ersetzt sind, und vorzugsweise Fluor, Chlor oder Brom, falls ein Wasserstoffatom ersetzt ist) Alkylgruppen mit 1 bis 6 Kohlenstoffatomen, die mit 1 bis 3 Substituenten (vorzugsweise 1) ausgewählt aus der Gruppe bestehend aus C₁-C₄ Alkoxy, Aryl, Heterocyclyl, C(=Y*)R^{5*} (wobei R^{5*} wie zuvor definiert ist), C(=Y*)NR^{6*} R^{7*} (wobei R^{6*} und R^{7*} wie zuvor definiert sind), Oxiranyl und Glycidyl substituiert sind; (vorzugsweise sind nicht mehr als 2 der Reste R¹¹, R¹² und R¹³ Wasserstoff, besonders bevorzugt ist maximal einer der Reste R¹¹, R¹² und R¹³ Wasserstoff);
m=0 oder 1; und m=0, 1 oder 2 darstellt.

Zu den besonders bevorzugten Initiatoren gehören Benzylhalogenide, wie p-Chlormethylstyrol, α-Dichlorxylol, α,α-Dichlorxylol, α,α-Dibromxylol und Hexakis(α-brommethyl)benzol, Benzylchlorid, Benzylbromid, 1-Brom-1-phenylethan und 1-Chlor-1-phenylethan;
Carbonsäurederivate, die an der α-Position halogeniert sind, wie beispielsweise Propyl-2-brompropionat, Methyl-2-chlorpropionat, Ethyl-2-chlorpropionat, Methyl-2-brompropionat, Ethyl-2-bromisobutyrat; Tosylhalogenide, wie p-Toluolsulfonylchlorid; Alkylhalogenide, wie Tetrachlormethan, Tribrom(meth)an, 1-Vinylethylchlorid, 1-Vinylethylbromid; und Halogenderivate von Phosphorsäureestern, wie Dimethylphosphorsäurechlorid.

Der Initiator wird im allgemeinen in einer Konzentration im Bereich von 10⁻⁴ mol/L bis 3 mol/L, vorzugsweise im Bereich von 10⁻³ mol/L bis 10⁻¹ mol/L und besonders bevorzugt im Bereich von 5*10⁻² mol/L bis 5*10⁻¹ mol/L eingesetzt, ohne daß hierdurch eine Beschränkung erfolgen soll. Aus dem Verhältnis Initiator zu Monomer ergibt sich das Molekulargewicht des Polymeren, falls das gesamte Monomer umgesetzt wird. Vorzugsweise liegt dieses Verhältnis im Bereich von 10⁻⁴ zu 1 bis 0,5 zu 1, besonders bevorzugt im Bereich von 5*10⁻³ zu 1 bis 5*10⁻² zu 1.

Zur Durchführung der Polymerisation werden Katalysatoren eingesetzt, die mindestens ein Übergangsmetall umfassen. Hierbei kann jede Übergangsmetallverbindung eingesetzt werden, die mit dem Initiator, bzw. der Polymerkette, die eine übertragbare Atomgruppe aufweist, einen Redox-Zyklus bilden kann. Bei diesen Zyklen bilden die übertragbare Atomgruppe und der Katalysator reversibel eine Verbindung, wobei die Oxidationsstufe des Übergangsmetalls erhöht bzw. erniedrigt wird. Man geht davon aus, daß hierbei Radikale freigesetzt bzw. eingefangen werden, so daß die Radikalkonzentration sehr gering bleibt. Es ist allerdings auch möglich, daß durch die Addition der Übergangsmetallverbindung an die Übertragbare Atomgruppe die Insertion von ethylenisch ungesättigten Monomeren in die Bindung Y-X bzw. Y(M)_{z}-X ermöglicht bzw. erleichtert wird, wobei Y und X die zuvor genannten Bedeutung haben und M die Monomeren bezeichnet, während z den Polymerisationsgrad darstellt.

Bevorzugte Übergangsmetalle sind hierbei Cu, Fe, Cr, Co, Ne, Sm, Mn, Mo, Ag, Zn, Pd, Pt, Re, Rh, Ir, In, Yd, und/oder Ru, die in geeigneten Oxidationsstufen eingesetzt werden. Diese Metalle können einzeln sowie als Mischung eingesetzt werden. Es wird angenommen, daß diese Metalle die Redox-Zyklen der Polymerisation katalysieren, wobei beispielsweise das Redoxpaar Cu⁺/Cu²⁺ oder Fe²⁺/Fe³⁺ wirksam ist. Dementsprechend werden die Metallverbindungen als Halogenide, wie beispielsweise Chlorid oder Bromid, als Alkoxid, Hydroxid, Oxid, Sulfat, Phosphat, oder Hexafluorophosphat, Trifluormethansulfat der Reaktionsmischung zugefügt. Zu den bevorzugten metallischen Verbindungen gehören Cu₂O, CuBr, CuCl, CuI, CuN₃, CuSCN, CuCN, CuNO₂, CuNO₃, CuBF₄, Cu(CH₃COO) Cu(CF₃COO), FeBr₃, RuBr₂, CrCl₂ und NiBr₂.

Es können aber auch Verbindungen in höheren Oxidationsstufen, wie beispielsweise CuBr₂, CuCl₂, CuO, CrCl₃, Fe₂O₃ und FeBr₃, eingesetzt werden. In diesen Fällen kann die Reaktion mit Hilfe klassischer Radikalbildner, wie beispielsweise AIBN initiiert werden. Hierbei werden die ÜbergangsmetallVerbindungen zunächst reduziert, da sie mit den aus den klassischen Radikalbildnern erzeugten Radikalen umgesetzt werden. Es handelt sich hierbei um die Reverse-ATRP, wie diese von Wang und Matyjaszewski in Macromolekules (1995), Bd. 28, S. 7572-7573 beschrieben wurde.

Darüber hinaus können die Übergangsmetalle als Metall in der Oxidationsstufe null, insbesondere in Mischung mit den zuvor genannten Verbindungen zur Katalyse verwendet werden, wie dies beispielsweise in WO 98/40415 dargestellt ist. In diesen Fällen läßt sich die Reaktionsgeschwindigkeit der Umsetzung erhöhen. Man nimmt an, daß hierdurch die Konzentration an katalytisch wirksamer Übergangsmetallverbindung erhöht wird, indem Übergangsmetalle in einer hohen Oxidationsstufe mit metallischem Übergangsmetall komproportionieren.

Das molare Verhältnis Übergangsmetall zu Initiator liegt im allgemeinen im Bereich von 0,0001:1 bis 10:1, vorzugsweise im Bereich von 0,001:1 bis 5:1 und besonders bevorzugt im Bereich von 0,01:1 bis 2:1, ohne daß hierdurch eine Beschränkung erfolgen soll.

Die Polymerisation findet in Gegenwart von Liganden statt, die mit dem oder den metallischen Katalysatoren eine Koordinationsverbindung bilden können. Diese Liganden dienen unter anderem zur Erhöhung der Löslichkeit der Übergangsmetallverbindung. Eine weitere wichtige Funktion der Liganden besteht darin, daß die Bildung von stabilen Organometallverbindungen vermieden wird. Dies ist besonders wichtig, da diese stabilen Verbindungen bei den gewählten Reaktionsbedingungen nicht polymerisieren würden. Des weiteren wird angenommen, daß die Liganden die Abstraktion der übertragbaren Atomgruppe erleichtern.

Diese Liganden sind an sich bekannt und beispielsweise in WO 97/18247, WO 98/40415 beschrieben. Diese Verbindungen weisen im allgemeinen ein oder mehrere Stickstoff-, Sauerstoff-, Phosphor- und/oder Schwefelatome auf, über die das Metallatom gebunden werden kann. Viele dieser Liganden lassen sich im allgemeinen durch die Formel R¹⁶-Z-(R¹⁸-Z)ₘ-R¹⁷ darstellen, worin R¹⁶ und R¹⁷ unabhängig H, C₁ bis C₂₀ Alkyl, Aryl, Heterocyclyl bedeuten, die ggf. substituiert sein können. Zu diesen Substituenten zählen u. a. Alkoxyreste und die Alkylaminoreste. R¹⁶ und R¹⁷ können ggf. einen gesättigten, ungesättigten oder heterocyclischen Ring bilden. Z bedeutet O, S, NH, NR¹⁹ oder PR¹⁹, wobei R¹⁹ die gleiche Bedeutung wie R¹⁶ hat. R¹⁶ bedeutet unabhängig eine divalente Gruppe mit 1 bis 40 C-Atomen, vorzugsweise 2 bis 4 C-Atomen, die linear, verzweigt oder cyclisch sein kann, wie beispielsweise eine Methylen-, Ethylen-, Propylen- oder Butylengruppe. Die Bedeutung von Alkyl und Aryl wurde zuvor dargelegt. Heterocyclylreste sind cyclische Reste mit 4 bis 12 Kohlenstoffatome, bei denen ein oder mehrere der CH₂-Gruppen des Ringes durch Heteroatomgruppen, wie O, S, NH, und/oder NR, ersetzt sind, wobei der Rest R, die gleich Bedeutung hat, wie R¹⁶ hat.

Eine weitere Gruppe von geeigneten Liganden läßt sich durch die Formel 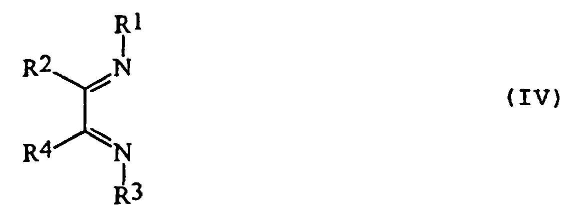 darstellen, worin R¹, R², R³ und R⁴ unabhängig H, C₁ bis C₂₀ Alkyl-, Aryl-, Heterocyclyl- und/oder Heteroarylrest bedeuten, wobei die Reste R¹ und R² bzw. R³ und R⁴ zusammen einen gesättigten oder ungesättigten Ring bilden können.

Bevorzugte Liganden sind hierbei Chelatliganden, die N-Atome enthalten.

Zu den bevorzugten Liganden gehören unter anderem Triphenylphosphan, 2,2-Bipyridin, Alkyl-2,2-bipyridin, wie 4,4-Di-(5-nonyl)-2,2-bipyridin, 4,4-Di-(5-heptyl)-2,2 Bipyridin, Tris(2-aminoethyl)amin (TREN), N,N,N',N',N''-Pentamethyldiethylentriamin, 1,1,4,7,10,10-Hexamethyltriethlyentetramin und/oder Tetramethylethylendiamin. Weitere bevorzugte Liganden sind beispielsweise in WO 97/47661 beschrieben. Die Liganden können einzeln oder als Mischung eingesetzt werden.

Diese Liganden können in situ mit den Metallverbindungen Koordinationsverbindungen bilden oder sie können zunächst als Koordinationsverbindungen hergestellt werden und anschließend in die Reaktionsmischung gegeben werden.

Das Verhältnis Ligand zu Übergangsmetall ist abhängig von der Zähnigkeit des Liganden und der Koordinationszahl des Übergangsmetalls. Im allgemeinen liegt das molare Verhältnis im Bereich 100:1 bis 0,1:1, vorzugsweise 6:1 bis 0,1:1 und besonders bevorzugt 3:1 bis 0,5:1, ohne daß hierdurch eine Beschränkung erfolgen soll.

Je nach erwünschter Polymerlösung werden die Monomere, die Übergangsmetallkatalysatoren, die Liganden und die Initiatoren ausgewählt. Es wird angenommen, daß eine hohe Geschwindigkeitskonstante der Reaktion zwischen dem Übergangsmetall-Ligand-Komplex und der übertragbaren Atomgruppe wesentlich für eine enge Molekulargewichtsverteilung ist. Ist die Geschwindigkeitskonstante dieser Reaktion zu gering, so wird die Konzentration an Radikalen zu hoch, so daß die typischen Abbruchreaktionen auftreten, die für eine breite Molekulargewichtsverteilung verantwortlich sind. Die Austauschrate ist beispielsweise abhängig von der übertragbaren Atomgruppe, dem Übergangsmetall, der Liganden und dem Anion der Übergangsmetallverbindung. Wertvolle Hinweise zur Auswahl dieser Komponenten findet der Fachmann beispielsweise in WO 98/40415.

Neben dem zuvor erläuterten ATRP-Verfahren können die erfindungsgemäßen Gradientencopolymere beispielsweise auch über RAFT-Methoden ("Reversible Addition Fragmentation Chain Transfer") erhalten werden. Dieses Verfahren ist beispielsweise in WO 98/01478 ausführlich dargestellt, worauf für Zwecke der Offenbarung ausdrücklich Bezug genommen wird.

Die Polymerisation kann bei Normaldruck, Unter- od. Überdruck durchgeführt werden. Auch die Polymerisationstemperatur ist unkritisch. Im allgemeinen liegt sie jedoch im Bereich von -20° - 200°C, vorzugsweise 0° - 130°C und besonders bevorzugt 60° - 120°C.

Die Polymerisation kann mit oder ohne Lösungsmittel durchgeführt werden. Der Begriff des Lösungsmittels ist hierbei weit zu verstehen.

Vorzugsweise wird die Polymerisation in einem unpolaren Lösungsmittel durchgeführt. Hierzu gehören Kohlenwasserstofflösungsmittel, wie beispielsweise aromatische Lösungsmittel, wie Toluol, Benzol und Xylol, gesättigte Kohlenwasserstoffe, wie beispielsweise Cyclohexan, Heptan, Octan, Nonan, Decan, Dodecan, die auch verzweigt vorliegen können. Diese Lösungsmittel können einzeln sowie als Mischung verwendet werden. Besonders bevorzugte Lösungsmittel sind Mineralöle und synthetische Öle sowie Mischungen hiervon. Von diesen sind Mineralöle ganz besonders bevorzugt.

Mineralöle sind an sich bekannt und kommerziell erhältlich. Sie werden im allgemeinen aus Erdöl oder Rohöl durch Destillation und/oder Raffination und gegebenenfalls weitere Reinigungs- und Veredelungsverfahren gewonnen, wobei unter den Begriff Mineralöl insbesondere die höhersiedenden Anteile des Roh- oder Erdöls fallen. Im allgemeinen liegt der Siedepunkt von Mineralöl höher als 200 °C, vorzugsweise höher als 300 °C, bei 50 mbar. Die Herstellung durch Schwelen von Schieferöl, Verkoken von Steinkohle, Destillation unter Luftabschluß von Braunkohle sowie Hydrieren von Stein- oder Braunkohle ist ebenfalls möglich. Zu einem geringen Anteil werden Mineralöle auch aus Rohstoffen pflanzlichen (z. B. aus Jojoba, Raps) od. tierischen (z. B. Klauenöl) Ursprungs hergestellt. Dementsprechend weisen Mineralöle, je nach Herkunft unterschiedliche Anteile an aromatischen, cyclischen, verzweigten und linearen Kohlenwasserstoffen auf.

Im allgemeinen unterscheidet man paraffinbasische, naphtenische und aromatische Anteile in Rohölen bzw. Mineralölen, wobei die Begriffe paraffinbasischer Anteil für längerkettig bzw. stark verzweigte iso-Alkane und naphtenischer Anteil für Cycloalkane stehen. Darüber hinaus weisen Mineralöle, je nach Herkunft und Veredelung unterschiedliche Anteile an n-Alkanen, iso-Alkanen mit einem geringen Verzweigungsgrad, sogenannte monomethylverzweigten Paraffine, und Verbindungen mit Heteroatomen, insbesondere O, N und/oder S auf, denen polare Eigenschaften zugesprochen werden. Der Anteil der n-Alkane beträgt in bevorzugten Mineralölen weniger als 3 Gew.-%, der Anteil der O, N und/oder S-haltigen Verbindungen weniger als 6 Gew.-%. Der Anteil der Aromaten und der monomethylverzweigten Paraffine liegt im allgemeinen jeweils im Bereich von 0 bis 30 Gew.-%. Gemäß einem interessanten Aspekt umfaßt Mineralöl hauptsächlich naphtenische und paraffinbasische Alkane, die im allgemeinen mehr als 13, bevorzugt mehr als 18 und ganz besonders bevorzugt mehr als 20 Kohlenstoffatome aufweisen. Der Anteil dieser Verbindungen ist im allgemeinen ≥ 60 Gew.-%, vorzugsweise ≥ 80 Gew.-%, ohne daß hierdurch eine Beschränkung erfolgen soll.

Eine Analyse von besonders bevorzugten Mineralölen, die mittels herkömmlicher Verfahren, wie Harnstofftrennung und Flüssigkeitschromatographie an Kieselgel, erfolgte, zeigt beispielsweise folgende Bestandteile, wobei sich die Prozentangaben auf das Gesamtgewicht des jeweils eingesetzten Mineralöls beziehen:
n-Alkane mit ca. 18 bis 31 C-Atome:
   0,7 - 1,0 %,
gering verzweigte Alkane mit 18 bis 31 C-Atome:
   1,0 - 8,0 %,
Aromaten mit 14 bis 32 C-Atomen:
   0,4 - 10,7 %,
Iso- und Cyclo-Alkane mit 20 bis 32 C-Atomen:
   60,7- 82,4 %,
polare Verbindungen:
   0,1 - 0,8 %,
Verlust:
   6,9 - 19,4 %.

Wertvolle Hinweise hinsichtlich der Analyse von Mineralölen sowie eine Aufzählung von Mineralölen, die eine abweichende Zusammensetzung aufweisen, findet sich beispielsweise in Ullmanns Encyclopedia of Industrial Chemistry, 5^{th} Edition on CD-ROM, 1997, Stichwort "lubricants and related products".

Synthetische Öle sind unter anderem organische Ester, organische Ether, wie Siliconöle, und synthetische Kohlenwasserstoffe, insbesondere Polyolefine. Sie sind meist etwas teurer als die mineralischen Öle, haben aber Vorteile hinsichtlich ihrer Leistungsfähigkeit. Zur Verdeutlichung soll noch auf die 5 API-Klassen der Grundöltypen (API: American Petroleum Institute) hingewiesen werden, wobei diese Grundöle besonders bevorzugt als Lösungsmittel eingesetzt werden können.

Diese Lösungsmittel können unter anderem in einer Menge von 1 bis 99 Gew.-%, bevorzugt von 5 bis 95 Gew.-%, besonders bevorzugt von 5 bis 60 Gew.-% und ganz besonders bevorzugt 10 bis 50 Gew.-%, bezogen auf das Gesamtgewicht der Mischung, eingesetzt werden, ohne daß hierdurch eine Beschränkung erfolgen soll.

Die so hergestellten Polymere weisen im allgemeinen ein Molekulargewicht im Bereich von 1 000 bis 1 000 000 g/mol, vorzugsweise im Bereich von 10*10³ bis 500*10³ g/mol und besonders bevorzugt im Bereich von 20*10³ bis 300*10³ g/mol auf, ohne daß hierdurch eine Beschränkung erfolgen soll. Diese Werte beziehen sich auf das Gewichtsmittel des Molekulargewichts der polydispersen Polymere in der Zusammensetzung.

Der besondere Vorteil von ATRP im Vergleich zur herkömmlichen radikalischen Polymerisationsverfahren besteht darin, daß Polymere mit enger Molekulargewichtsverteilung hergestellt werden können. Ohne daß hierdurch eine Beschränkung erfolgen soll, weisen die erfindungsgemäßen Polymere eine Polydispersität, die durch M_{w}/Mₙ gegeben ist, im Bereich von 1 bis 12, vorzugsweise 1 bis 4,5, besonders bevorzugt 1 bis 3 und ganz besonders bevorzugt 1,05 bis 2 auf.

Verwendung finden erfindungsgemäße Copolymere unter anderem als Zusatz zu Schmierölen und Biodieselkraftstoffen, um den Pourpoint zu erniedrigen. Daher sind weitere interessante Aspekte der vorliegenden Erfindung Schmieröle und Biodieselkraftstoffe, welche erfindungsgemäße Copolymere enthalten.

Die erfindungsgemäßen Copolymere können einzeln oder als Mischung verwendet werden, wobei der Begriff Mischung weit zu verstehen ist. Hiervon werden sowohl Mischungen von verschiedenen Copolymeren der vorliegenden Erfindung als auch Mischungen von erfindungsgemäßen Copolymeren mit herkömmlichen Polymeren umfaßt.

Biodieselkraftstoffe sind an sich bekannt und bezeichnen natürliche, insbesondere nachwachsende Öle, die zum Betreiben von speziell angepaßten Dieselmotoren geeignet sind. Zu diesen Kraftstoffen gehören beispielsweise pflanzliche Öle, wie Rapsöl.

Beispiele für Schmieröle sind unter anderem Motorenöle, Getriebeöle, Turbinenöle, Hydraulikflüssigkeiten, Pumpenöle, Wärmeübertragungsöle, Isolieröle, Schneidöle und Zylinderöle.

Diese Schmieröle weisen im allgemeinen ein Grundöl sowie ein oder mehrere Additive auf, die in der Fachwelt weithin bekannt sind.

Als Grundöl ist im Prinzip jede Verbindung geeignet, die für eine hinreichenden Schmierfilm sorgt, der auch bei erhöhten Temperaturen nicht reißt. Zur Bestimmung dieser Eigenschaft können beispielsweise die Viskositäten dienen, wie sie beispielsweise für Motoröle in den SAE-Spezifikationen festgelegt sind.

Zu den hierfür geeigneten Verbindungen gehören unter anderem natürliche Öle, mineralische Öle und synthetische Öle sowie Mischungen hiervon.

Natürliche Öle sind tierische oder pflanzliche Öle, wie beispielsweise Klauenöle oder Jojobaöle. Mineralische Öle wurden zuvor als Lösungsmittel ausführlich beschrieben. Sie sind insbesondere hinsichtlich ihres günstigen Preises vorteilhaft. Synthetische Öle sind unter anderem organische Ester, synthetische Kohlenwasserstoffe, insbesondere Polyolefine, die den zuvor genannten Anforderungen genügen. Sie sind meist etwas teurer als die mineralischen Öle, haben aber Vorteile hinsichtlich ihrer Leistungsfähigkeit.

Diese Grundöle können auch als Mischungen eingesetzt werden und sind vielfach kommerziell erhältlich.

Die erfindungsgemäßen Copolymere können auch als Bestandteil von sogenannten DI-Paketen (Detergent-Inhibitor) oder anderen Konzentraten, die Schmierölen zugesetzt werden, eingesetzt werden, die weithin bekannt sind. Diese Konzentrate umfassen 15 bis 85 Gew.-% eines oder mehrerer Copolymere der vorliegenden Erfindung. Darüber hinaus kann das Konzentrat zusätzlich organische Lösungsmittel, insbesondere ein Mineralöl und/oder ein synthetisches Öl aufweisen.

Neben dem Grundöl enthalten Schmieröle oder die zuvor genannten Konzentrate im allgemeinen Additive. Zu diesen Additiven gehören unter anderem Viskositätsindexverbesserer, Antioxidantien, Alterungsschutzmittel, Korrosionsinhibitoren, Detergentien, Dispergentien, EP-Additive, Entschäumungsmittel, Reibungsminderer, Stockpunkterniedriger, Farbstoffe, Geruchsstoffe und/oder Demulgatoren.

Die Additive bewirken ein günstiges Fließverhalten bei tiefen und hohen Temperaturen (Verbesserung des Viskositätsindexes), sie suspendieren Feststoffe (Detergent-Dispersant-Verhalten), neutralisieren saure Reaktionsprodukte u. bilden einen Schutzfilm auf der Zylinderoberfläche (EP-Zusatz, für "extreme pressure"). Weitere wertvolle Hinweise findet der Fachmann in Ullmann's Encyclopedia of Industrial Chemistry, Fifth Edition auf CD-ROM, Ausgabe 1998.

Die Mengen, in denen diese Additive eingesetzt werden, sind von dem Anwendungsgebiet des Schmiermittels abhängig. Im allgemeinen beträgt der Anteil des Grundöls jedoch zwischen 25 bis 90 Gew.-%, bevorzugt 50 bis 75 Gew.-%. Der Anteil von Copolymeren der vorliegenden Erfindung in Schmierölen liegt vorzugsweise im Bereich von 0,01 bis 10 Gew.-%, besonders bevorzugt 0,01 bis 2 Gew.-%. Biodieselkraftstoffe weisen die Copolymere der vorliegenden Erfindung vorzugsweise in einer Menge im Bereich von 0,01 bis 10 Gew.-%, besonders bevorzugt 0,01 bis 2 Gew.-% auf.

Nachfolgend wird die Erfindung durch Beispiele und Vergleichsbeispiele eingehender erläutert, ohne daß die Erfindung auf diese Beispiele beschränkt werden soll.

In den nachfolgenden Versuchen wurden die Stockpunkte gemäß ASTM D 97-93, die MRV-Werte gemäß ASTM 4684-92 und die Scanning-Brookfield-Resultat gemäß ASTM D 5133-90 bestimmt. Der Gelation-Index ist das Maximum der ersten mathematischen Ableitung des Viskositäts-Temperatur-Diagrammms der Scanning-Brookfield-Messung. Hinsichtlich des Yield-Stress-Wertes der MRV-Messung sollte berücksichtigt werden, daß Meßwerte kleiner als 35 Pa aufgrund der Meßgenauigkeit mit dem Wert 0 angegeben sind.

### Beispiele und Vergleichsbeispiel

Die ATRP-Polymerisationsversuche wurden in einem Rundkolben durchgeführt, der mit Säbelrührer, Heizpilz, Stickstoffüberleitung, Intensivkühler und Tropftrichter ausgestattet war. Zunächst wurden 100 g des SMA/LMA-Gemisches (SMA: ein Gemisch von langkettigen Methacrylaten, welches aus der Reaktion von Methylmethacrylat mit ®Dehydad von Henkel KGaA erhalten wurde; LMA: ein Gemisch von langkettigen Methacrylaten, welches aus der Reaktion von Methylmethacrylat mit ®Lorol von Henkel KGaA erhalten wurde) mit einem 41:59-Gewichtsverhältnis zusammen mit 50 g Mineralöl der Fa. Petro Canada im Reaktionskolben vorgelegt und durch Trockeneiszugabe und Überleiten von Stickstoff inertisiert. Anschließend wurde die Mischung unter Rühren auf 95°C erwärmt. Während des Aufwärmvorgangs wurden 0,52 g CuBr und 1,25 g PMDETA (Pentamethyldiethylentriamin) bei etwa 70°C zugegeben. Nach Erreichen der vorgegebenen Temperatur von 95°C wurden 0,71 g EBiB (Ethyl-2-bromisobutyrat) beigefügt, wobei eine heterogene Mischung gebildet wurde, da sich der Katalysator nur unvollständig gelöst hatte.

Nach einer Reaktionszeit von 15 Minuten bei 95°C wurde die Zugabe von 100 g SMA/LMA-Gemisch mit einem SMA:LMA-Gewichtsverhältnis von 48:52 gestartet. Die Zugabe erfolgte bei konstanter Zulaufgeschwindigkeit über einen Zeitraum von 2 Stunden. Nach Beendigung der Zugabe wurde weitere 2 Stunden bei 95°C gerührt.

Anschließend wurde die Mischung auf Raumtemperatur abgekühlt, mit etwa 400 ml Toluol verdünnt und über 10 g Al₂O₃ filtriert, um Verunreinigungen abzutrennen. Danach wurde das verwendete Toluol mit einem Rotationsverdampfer abdestilliert. Diese Mischung wurde mittels GPC analysiert, um das Zahlenmittel des Molekulargewichts (Mn) und die Polydispersität Mw/Mn (PDI) zu bestimmen.

Anschließend wurde die in Tabelle 1 angegebene Menge des so erhaltenen Polymers mit einem 15W-40 (SAE) Motorenöl für Personenkraftwagen, bestehend aus einer Mischung aus einem Gruppe I- und einem Gruppe II-Mineralöl (Gewichtsverhältnis 1 : 4) gemischt. Danach wurde die Wirksamkeit des Additivs gemäß den zuvor angegebenen Versuchen getestet. Die erhaltenen Ergebnisse sind ebenfalls in Tabelle 1 dargelegt.

Zu Vergleichszwecken wurde eine Copolymerenmischung gemäß EP-A-0861 859 hergestellt. Hierbei wurden die gleichen Mischungen (41:59 und 48:52 SMA:LMA-Mischungen verwendet. Allerdings wurden jedoch keine Gradientencopolymere sondern physikalische Mischungen von statistischen Copolymeren erhalten, da die Lebensdauer der während der Polymerisation gebildeten Radikale klein im Verhältnis zur Änderung der Monomermischung ist.

**Tabelle 1**

| | Beispiel 1 | Beispiel 2 | Vergleich |
|---|---|---|---|
| Mn | 56100 | 56100 | 55800 |
| PDI | 1, 35 | 1, 35 | 2,34 |
| Polymergehalt der Mischung [Gew.-%] | 0,024 | 0,036 | 0,03 |
| Stockpunkt | -42 | -45 | -39 |
| MRV | | | |
| Viskosität [Pa*s] | 25,7 | 25,7 | 31,3 |
| Yield Stress [Pa] | 0 | 0 | 0 |
| Scanning-Brookfield | | | |
| Viskosität bei -20°C [mPa*s] | 12000 | 39000 | fest |
| Temp. bei 30000 mPa*s [°C] | -34,5 | -28,8 | -26,1 |
| Gelation-Index bei °C | 5,8 bei -13 | 9,9 bei -24 | 13,8 bei -22 |

## Patentansprüche

1. Gradientencopolymere, **dadurch** erhältlich, daß man eine Mischung von olefinisch ungesättigten Monomeren polymerisiert, die aus
a) 0 bis 40 Gew.-% einer oder mehreren ethylenisch ungesättigten Esterverbindungen der Formel (I) 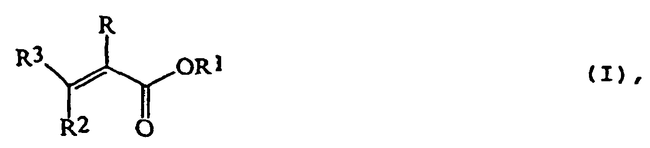
worin R Wasserstoff oder Methyl darstellt, R¹ einen linearen oder verzweigten Alkylrest mit 1 bis 5 Kohlenstoffatomen bedeutet, R² und R³ unabhängig Wasserstoff oder eine Gruppe der Formel -COOR' darstellen, worin R' Wasserstoff oder eine Alkylgruppe mit 1 bis 5 Kohlenstoffatomen bedeutet,
b) 10 bis 98 Gew.-% einer oder mehreren ethylenisch ungesättigten Esterverbindungen der Formel (II) 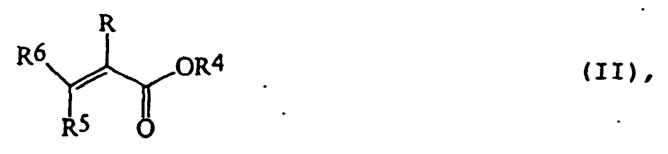
worin R Wasserstoff oder Methyl darstellt, R⁴ einen linearen oder verzweigten Alkylrest mit 6 bis 15 Kohlenstoffatomen bedeutet, R⁵ und R⁶ unabhängig Wasserstoff oder eine Gruppe der Formel -COOR'' darstellen, worin R'' Wasserstoff oder eine Alkylgruppe mit 6 bis 15 Kohlenstoffatomen bedeutet,
c) 0 bis 80 Gew.-% einer oder mehreren ethylenisch ungesättigten Esterverbindungen der Formel (III) 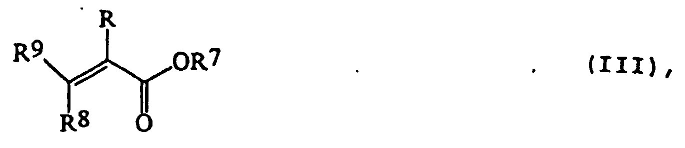
worin R Wasserstoff oder Methyl darstellt, R⁷ einen linearen oder verzweigten Alkylrest mit 16 bis 30 Kohlenstoffatomen bedeutet, R⁸ und R⁹ unabhängig Wasserstoff oder eine Gruppe der Formel -COOR''' darstellen, worin R''' Wasserstoff oder eine Alkylgruppe mit 16 bis 30 Kohlenstoffatomen bedeutet,
d) 0 bis 50 Gew.-% Comonomer
besteht, jeweils bezogen auf das Gesamtgewicht der ethylenisch ungesättigten Monomere, wobei man die Mischung der ethylenisch ungesättigten Monomere während des Kettenwachstums verändert, um Copolymere zu erhalten, die einen Gradient aufweisen . und wobei mindestens zwei verschiedene Monomere polymerisiert werden.

2. Gradientencopolymere gemäß Anspruch 1, **dadurch gekennzeichnet, daß** der Gradient des Copolymeren mehr als 5% beträgt.

3. Gradientencopolymere gemäß Anspruch 1 oder 2, **dadurch gekennzeichnet, daß** das Copolymere einen linearen Gradienten aufweist.

4. Gradientencopolymere gemäß einem oder mehreren der vorhergehenden Ansprüche, **dadurch gekennzeichnet, daß** das Gewichtsmittel der Molmasse des Copolymers im Bereich von 10 000 - 500 000 g/mol liegt.

5. Gradientencopolymere gemäß einem oder mehreren der vorhergehenden Ansprüche, **dadurch gekennzeichnet, daß** die Polydispersität (M_{w}/Mₙ) im Bereich von 1 bis 12, insbesondere von 1,05 bis 2 liegt.

6. Konzentrat als Schmieröladditiv, **dadurch gekennzeichnet, daß** das Konzentrat 15 bis 85 Gew.-% eines oder mehrerer Gradientencopolymere gemäß einem oder mehreren der Ansprüche 1 bis 5 enthält.

7. Konzentrat gemäß Anspruch 6, **dadurch gekennzeichnet, daß** das Konzentrat zusätzlich organische Lösungsmittel, insbesondere ein Mineralöl und/oder ein synthetisches Öl aufweist.

8. Schmieröl aufweisend Gradientencopolymere gemäß einem oder mehreren der Ansprüche 1 bis 5.

9. Schmieröl gemäß Anspruch 8, **dadurch gekennzeichnet, daß** das Gradientencopolymere gemäß einem oder mehreren der Ansprüche 1 bis 5 in einer Menge im Bereich von 0,01 bis 10 Gew.-%, insbesondere 0,01 bis 2 Gew.-% vorhanden ist.

10. Konzentrat gemäß Anspruch 6 oder Schmieröl gemäß Anspruch 8, **dadurch gekennzeichnet, daß** zusätzlich Viskositätsindexverbesserer, Antioxidantien, Korrosionsinhibitoren, Detergentien, Dispergentien, EP-Additive, Entschäumungsmittel, Reibungsminderer und/oder Demulgatoren enthalten sind.

11. Biodieselkraftstoff aufweisend Gradientencopolymere gemäß einem oder mehreren der Ansprüche 1 bis 5.

12. Biodieselkraftstoff gemäß Anspruch 11, **dadurch gekennzeichnet, daß** das Gradientencopolymere gemäß einem oder mehreren der Ansprüche 1 bis 5 in einer Menge im Bereich von 0,01 bis 10 Gew.-%, insbesondere 0,01 bis 2 Gew.-% vorhanden ist.

13. Verfahren zur Herstellung von Gradientencopolymeren gemäß einem oder mehreren der Ansprüche 1 bis 5, **dadurch gekennzeichnet, daß** man die olefinisch ungesättigte Monomere mittels Initiatoren, die eine übertragbare Atomgruppe aufweisen, und einem oder mehreren Katalysatoren, die mindestens ein Übergangsmetall umfassen, in Gegenwart von Liganden, die mit dem oder den metallischen Katalysatoren eine Koordinationsverbindung bilden können, polymerisiert.

14. Verwendung von Copolymeren gemäß einem oder mehreren der Ansprüche 1 bis 5 als Stockpunktverbesserer oder Fließverbesserer.

## Claims

1. Gradient copolymers obtainable by polymerizing a mixture of olefinically unsaturated monomers which consists of
a) 0 to 40% by weight of one or more ethylenically unsaturated ester compounds of the formula (I) 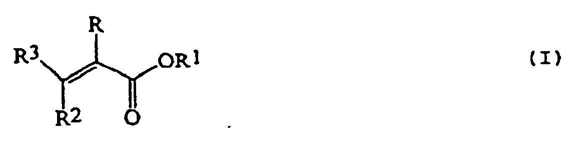
in which R is hydrogen or methyl, R¹ is a linear or branched alkyl radical having 1 to 5 carbon atoms, R² and R³ are each independently hydrogen or a group of the formula -COOR' in which R' is hydrogen or an alkyl group having 1 to 5 carbon atoms,
b) 10 to 98% by weight of one or more ethylenically unsaturated ester compounds of the formula (II) 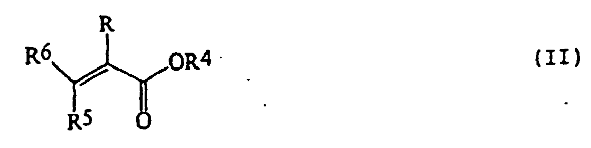
in which R is hydrogen or methyl, R⁴ is a linear or branched alkyl radical having 6 to 15 carbon atoms, R⁵ and R⁶ are each independently hydrogen or a group of the formula -COOR' in which R' is hydrogen or an alkyl group having 6 to 15 carbon atoms,
c) 0 to 80% by weight of one or more ethylenically unsaturated ester compounds of the formula (III) 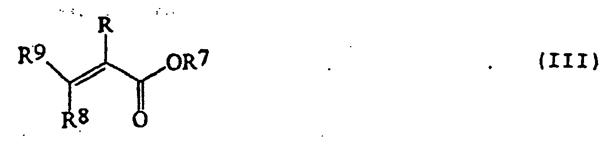
in which R is hydrogen or methyl, R⁷ is a linear or branched alkyl radical having 16 to 30 carbon atoms, R⁸ and R⁹ are each independently hydrogen or a group of the formula -COOR''' in which R''' is hydrogen or an alkyl group having 16 to 30 carbon atoms,
d) 0 to 50% by weight of comonomer,
based in each case on the total weight of the ethylenically unsaturated monomers, the mixture of the ethylenically unsaturated monomers being altered during the chain growth in order to obtain copolymers which have a gradient, and at least two different monomers being polymerized.

2. Gradient copolymers according to Claim 1, **characterized in that** the gradient of the copolymer is more than 5%.

3. Gradient copolymers according to Claim 1 or 2, **characterized in that** the copolymer has a linear gradient.

4. Gradient copolymers according to one or more of the preceding claims, **characterized in that** the weight-average molar mass of the copolymer is in the range of 10 000-500 000 g/mol.

5. Gradient copolymers according to one or more of the preceding claims, **characterized in that** the polydispersity (M_{w}/Mₙ) is in the range of 1 to 12, in particular of 1.05 to 2.

6. Concentrate as a lubricant oil additive, **characterized in that** the concentrate contains 15 to 85% by weight of one or more gradient copolymers according to one or more of Claims 1 to 5.

7. Concentrate according to Claim 6, **characterized in that** the concentrate additionally comprises organic solvent, in particular a mineral oil and/or a synthetic oil.

8. Lubricant oil comprising gradient copolymers according to one or more of Claims 1 to 5.

9. Lubricant oil according to Claim 8, **characterized in that** the gradient copolymer according to one or more of Claims 1 to 5 is present in an amount in the range of 0.01 to 10% by weight, in particular 0.01 to 2% by weight.

10. Concentrate according to Claim 6 or lubricant oil according to Claim 8, **characterized in that** viscosity index improvers, antioxidants, corrosion inhibitors, detergents, dispersants, EP additives, defoamers, friction modifiers and/or demulsifiers are additionally present.

11. Biodiesel fuel comprising gradient copolymers according to one or more of Claims 1 to 5.

12. Biodiesel fuel according to Claim 11, **characterized in that** the gradient copolymer according to one or more of Claims 1 to 5 is present in an amount in the range of 0.01 to 10% by weight, in particular 0.01 to 2% by weight.

13. Process for preparing gradient copolymers according to one or more of Claims 1 to 5, **characterized in that** the olefinically unsaturated monomers are polymerized by means of initiators which have a transferable atom group, and one or more catalysts which comprise at least one transition metal, in the presence of ligands which can form a coordination compound with the metallic catalyst(s).

14. Use of copolymers according to one or more of Claims 1 to 5 as pour point improvers or flow improvers.

## Revendications

1. Copolymère à gradient, pouvant être obtenu par polymérisation d'un mélange de monomères à insaturation oléfinique qui est constitué de
a) 0 à 40 % en poids d'un ou plusieurs esters à insaturation éthylénique, de formule (I) 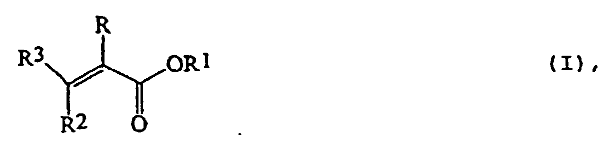
dans laquelle R représente un atome d'hydrogène ou le groupe méthyle, R¹ représente un radical alkyle linéaire ou ramifié ayant de 1 à 5 atomes de carbone, R² et R³ représentent indépendamment un atome d'hydrogène ou un groupe de formule -COOR', dans laquelle R' représente un atome d'hydrogène ou un groupe alkyle ayant de 1 à 5 atomes de carbone,
b) 10 à 98 % en poids d'un ou plusieurs esters à insaturation éthylénique, de formule (II) 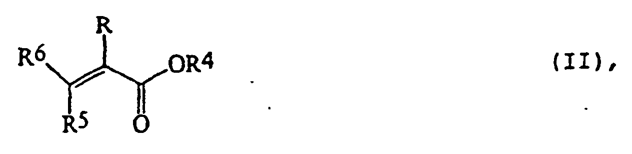
dans laquelle R représente un atome d'hydrogène ou le groupe méthyle, R⁴ représente un radical alkyle linéaire ou ramifié ayant de 6 à 15 atomes de carbone, R⁵ et R⁶ représentent indépendamment un atome d'hydrogène ou un groupe de formule -COOR", dans laquelle R" représente un atome d'hydrogène ou un groupe alkyle ayant de 6 à 15 atomes de carbone,
c) 0 à 80 % en poids d'un ou plusieurs esters à insaturation éthylénique, de formule (III) 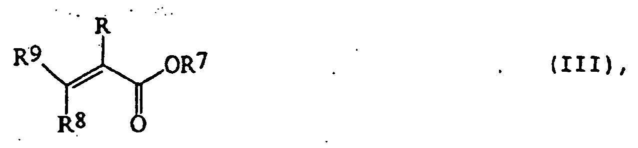
dans laquelle R représente un atome d'hydrogène ou le groupe méthyle, R⁷ représente un radical alkyle linéaire ou ramifié ayant de 16 à 30 atomes de carbone, R⁸ et R⁹ représentent indépendamment un atome d'hydrogène ou un groupe de formule -COOR'", dans laquelle R'" représente un atome d'hydrogène ou un groupe alkyle ayant de 16 à 30 atomes de carbone,
d) 0 à 50 % en poids d'un comonomère, chaque fois par rapport au poids total des monomères à insaturation éthylénique, en modifiant le mélange des monomères à insaturation éthylénique pendant la croissance de la chaîne, afin d'obtenir des copolymères qui présentent un gradient, et au moins deux monomères différents étant polymérisés.

2. Copolymère à gradient selon la revendication 1, **caractérisé en ce que** le gradient du copolymère est de plus de 5 %.

3. Copolymère à gradient selon la revendication 1 ou 2, **caractérisé en ce que** le copolymère présente un gradient linéaire.

4. Copolymère à gradient selon une ou plusieurs des revendications précédentes, **caractérisé en ce que** la moyenne en poids de la masse moléculaire du copolymère se situe dans la plage allant de 10 000 à 500 000 g/mole.

5. Copolymère à gradient selon une ou plusieurs des revendications précédentes, **caractérisé en ce que** la polydispersité (M_{w}/Mₙ) se situe dans la plage allant de 1 à 12, en particulier de 1,05 à 2.

6. Concentré en tant qu'additif pour huile de graissage, **caractérisé en ce que** le concentré contient de 15 à 85 % en poids d'un ou plusieurs copolymères à gradient selon une ou plusieurs des revendications 1 à 5.

7. Concentré selon la revendication 6, **caractérisé en ce que** le concentré comporte en outre des solvants organiques, en particulier une huile minérale et/ou une huile de synthèse.

8. Huile de graissage comportant des copolymères à gradient selon une ou plusieurs des revendications 1 à 5.

9. Huile de graissage selon la revendication 8, **caractérisée en ce que** le copolymère à gradient selon une ou plusieurs des revendications 1 à 5 est présent en une quantité dans la plage allant de 0,01 à 10 % en poids, en particulier de 0,01 à 2 % en poids.

10. Concentré selon la revendication 6 ou huile de graissage selon la revendication 8, **caractérisés en ce que** sont en outre contenus des agents améliorant l'indice de viscosité, des antioxydants, des inhibiteurs de corrosion, des détergents, des dispersants, des additifs EP (extrême pression), des antimousses, des agents réduisant le frottement et/ou des désémulsifiants.

11. Biocarburant pour moteurs diesel, comportant des polymères à gradient selon une ou plusieurs des revendications 1 à 5.

12. Biocarburant pour moteurs diesel selon la revendication 11, **caractérisé en ce que** le copolymère à gradient selon une ou plusieurs des revendications 1 à 5 est présent en une quantité dans la plage de 0,01 à 10 % en poids, en particulier de 0,01 à 2 % en poids.

13. Procédé pour la préparation de copolymères à gradient selon une ou plusieurs des revendications 1 à 5, **caractérisé en ce qu'**on polymérise les monomères à insaturation éthylénique au moyen d'amorceurs qui comportent un groupe d'atomes transférable et d'un ou plusieurs catalyseurs qui comportent au moins un métal de transition, en présence de ligands qui peuvent former un composé de coordination avec le ou les catalyseurs métalliques.

14. Utilisation de copolymères selon une ou plusieurs des revendications 1 à 5, en tant qu'agents d'amélioration du point d'écoulement ou agents d'amélioration de l'écoulement.
